# EUROPEAN PATENT APPLICATION

(11) **EP 4 060 278 A1**
(43) Date of publication of application: **21.09.2022**
(21) Application number: 21162573.6
(22) Date of filing: 15.03.2021
(51) Int. Cl.: F28F 21/00

(54) **A TUBE FOR A HEAT EXCHANGER AND A METHOD FOR MANUFACTURING THEREOF**

(71) Applicant: VALEO SYSTEMES THERMIQUES, 78320 Le Mesnil Saint-Denis (FR)
(72) Inventor: CASENAVE, Christian, 72210 LA SUZE SUR SARTHE (FR); STRAMECKI, Tomasz, 32 050 SKAWINA (PL); MADRY, Krystian, 32 050 SKAWINA (PL); GURBA, Maciej, 32 050 SKAWINA (PL); JAWORSKA, Katarzyna, 32 050 SKAWINA (PL); RUSEK, Filip, 32 050 SKAWINA (PL); BIALO, Lukasz, 32 050 SKAWINA (PL); PHILIPPE, Maryse, 72210 LA SUZE SUR SARTHE (FR); BELE-ZATA, Alfy, 72210 LA SUZE SUR SARTHE (FR)
(74) Representative: Valeo Systèmes Thermiques

(57) **Abstract**

The object of the invention is, among others, a tube (4) for a heat exchanger (1) comprising a tube structure (4a) made of lightweight metal alloy, wherein the tube structure (4a) comprises an inner surface (4b) and an outer surface (4b), the tube (4) further comprising: a first layer (100) of material on the outer surface (4c) of the tube structure (4a), the first layer (100) having different chemical composition than the tube structure (4a), a second layer (200) of material on the first layer (100) of material, the second layer (200) having different chemical composition than the tube structure (4a) and the first layer (100), wherein the first layer (100) comprises metallic material having a lower galvanic potential than the tube structure (4a), characterised in that the first layer (100) comprises the deposition of zinc particles within the first layer (100), wherein the deposition of zinc is not less than 3 g/m² and not more than 7 g/m², and in that the second layer (200) comprises at least an aluminum silicon compound, wherein the deposition of aluminum silicon compound within the second layer (200) is not less than 14 g/m² and not more than 16 g/m².

## Description

### FIELD OF THE INVENTION

The invention relates to tube. In particular, this invention relates to tube for a heat exchanger and method of manufacturing thereof.

### BACKGROUND OF THE INVENTION

Some of the heat exchangers of cars are placed in front of the car and consequently undergo corrosion, in particular by the ambient air.

The object of the invention aims to define a method for bringing filler metal and corrosion protection, on the aluminum tube for heat exchanger which is usually brazed under controlled atmosphere. With respect to extruded tubes, the metallurgical extrusion process does not allow bringing filler metal as rolled aluminum process. The method described below defines a corrosion protection solution for the tube, particularly before and after brazing in the controlled atmosphere.

There are known several coating technologies for extruded tubes having the objective of protecting the tubes from corrosion and for providing the filler metal for brazing. The known tubes for heat exchangers and methods of coating thereof have been discussed in further paragraphs.

One of the known method is to coat the tube for a heat exchanger with zinc metal. Further, the fin is cladded and brings the filler metal during the brazing process. In this fin-tube combination, fin is a cladded material produced by the known lamination process.

Another method discloses the zinc metal giving corrosion protection produced by the zinc arc spray (ZAS) method, wherein the liquid zinc is sprayed to the surface of the tubes to deposit about 6 to 7 g/m² of zinc as nominal values. This method includes high level of tolerances, i.e. 3 g/m² to ensure complete coverage of the tubes surface and compensate the uneven distribution of the zinc.

The invention aims to palliate the drawbacks of the prior art by providing a tube which does not require a clad, but instead it provides a corrosion protection and good brazing ability.

Another object of the invention is to provide a heat exchanger comprising such tube.

Another object of the invention is to provide a method for manufacturing of such tube.

### SUMMARY OF THE INVENTION

The object of the invention is, among others, a tube for a heat exchanger comprising a tube structure made of lightweight metal alloy, wherein the tube structure comprises an inner surface and an outer surface, the tube further comprising: a first layer of material on the outer surface of the tube structure, the first layer having different chemical composition than the tube structure, a second layer of material on the first layer of material, the second layer having different chemical composition than the tube structure and the first layer, wherein the first layer comprises metallic material having a lower galvanic potential than the tube structure, characterised in that the first layer comprises zinc particles, wherein the deposition of zinc within the first layer is not less than 3 g/m² and not more than 7 g/m², and in that the second layer comprises at least an aluminum silicon compound, wherein the deposition of aluminum silicon compound within the second layer is not less than 14 g/m² and not more than 16 g/m².

Advantageously, the deposition of zinc within the first layer is 5 g/m².

Advantageously, the tube structure is made of aluminum alloy and the first layer is applied directly onto said aluminum alloy.

Advantageously, the aluminum silicon compound comprises 12.6% of silicon.

Advantageously, the deposition of aluminum silicon compound within the second layer is 15 g/m².

Advantageously, the size of aluminum silicon particle is not smaller than 5 µm and not greater than 15 µm.

Advantageously, the second layer further comprises a potassium aluminum fluoride flux, KAlF₄, and a binder.

Advantageously, the deposition of potassium aluminum fluoride flux within the second layer is not less than 6 g/m² and not more than 8 g/m².

Advantageously, the deposition of potassium aluminum fluoride flux within the second layer is 7 g/m².

Advantageously, the binder is an organic polymer, wherein the deposition of binder is not less than 4 g/m² and not more than 6 g/m².

Advantageously, the deposition of organic polymer within the second layer is 5 g/m².

Advantageously, the tube structure is extruded tube.

Another object of the invention is, among others, a heat exchanger configured to heat exchange between fluids comprising at least one tube.

Advantageously, the heat exchanger comprises manifolds, plurality of tubes comprising open ends received in said manifolds, and plurality of fins interlaced between the tubes.

Advantageously, at least one tube is fixed between the manifolds by the means of brazing via second layer, so that the manifolds are fluidly connected to each other.

Advantageously, the first layer is located in-between the outer surface and the portion of manifold which is brazed to the tube.

Advantageously, at least one fin is fixed by the means of brazing via second layer in-between proximal pair of tubes.

Advantageously, the first layer is located in-between the outer surface and the portion of the fin which is brazed to the tube.

Another object of the invention is, among others, a method of manufacturing the tube structure for a heat exchanger comprising steps of: providing at least one light weight metal alloy tube structure, deposition of the first layer of material directly onto the outer surface of the tube by means of zinc arc spraying method, wherein the liquid zinc is sprayed onto the surface of the tubes to deposit about 5 g/m² of zinc, so that the complete coverage of the outer surface and even distribution of the zinc is provided, deposition of the second layer of material onto the first layer of material, drying of the first layer and the second layer.

### BRIEF DESCRITPTION OF DRAWINGS

Examples of the invention will be apparent from and described in detail with reference to the accompanying drawings, in which:
Fig. 1 shows a cross- section view of the tube, according to the first example.
Fig. 2 shows a cross- section view of the tube, according to the second example.
Fig. 3 shows a schematic view of the heat exchanger comprising the at least one tube depicted in Figs 1 or 2.
Fig. 4 shows a cross- section view of the tube- manifold assembly.
Fig. 5 a cross- section view of the tube- fin assembly.
Fig. 6 shows a process of manufacturing the tube of Figs 1 and 2.

### DETAILED DESCRIPTION OF EMBODIMENTS

The invention refers to tube for a heat exchanger. In particular, the invention relates to tube suitable for heat exchanger such as condenser, evaporator, gas cooler, chiller, and other. It is to be noted that the invention may also refer to other type of tube for the heat exchanger, for example radiator and alike.

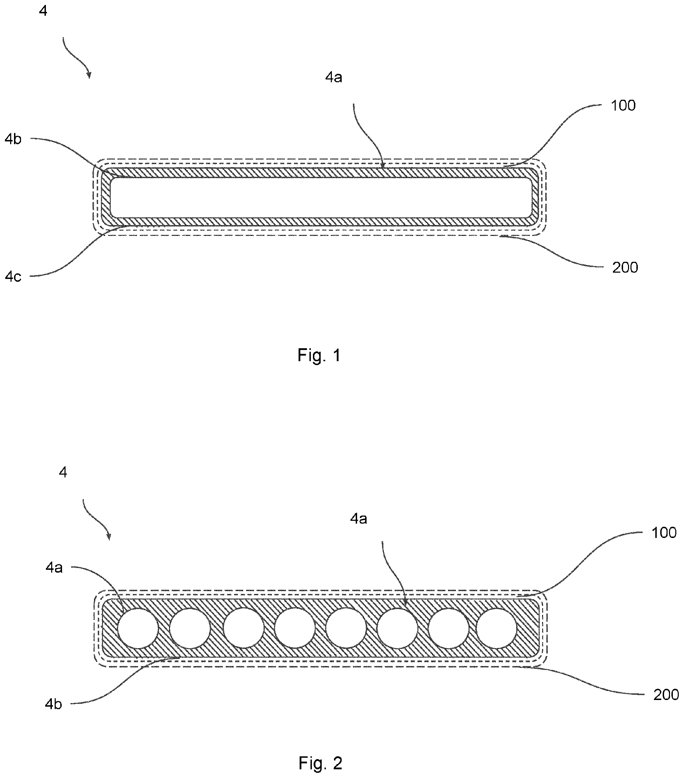

Figs 1 and 2 show an exemplary cross-section view of tube 4 comprising a tube structure 4a. The tube structure 4a may refer both to extruded and folded types of tubes. The tube structure 4a may comprise an axis of elongation. The cross-sections shown in Figs 1 and 2 and are selected in a plane perpendicular with respect to the main axis of elongation of the tube structure 4a. At least one tube structure 4a may comprise an inner surface 4b and an outer surface 4c. The inner surface 4b of the tube 4 may be defined as the surface of the channel or channels within the tube structure 4a. In Fig. 1, the inner surface 4b is depicted as the surface of the single channel for the fluid, whereas the tube 4 depicted in Fig. 2 comprises multiple channels for the fluid, thus it comprises plurality of inner surfaces 4b. The outer surface 4c of the tube structure 4a is the portion of the tube 4 which provides at least one wall fluidly insulating one fluid from the other, during the operational mode of the tube 4. Term "operational mode" may be defined based on the existence of the fluid for heat exchange within the channel or channels of the tube 4.

It is to be noted that term "tube structure" may refer to the tubes made in process of extrusion, as well as the tubes made in different process, e.g. folding, etc.

As further shown in Figs 1 and 2, the tube 4 may further comprise at least one first layer 100 of material configured to cover entire outer surface 4c of the tube 4. Further, the first layer 100 may adhere to the outer surface 4c of the tube structure 4a to ensure complete coverage of the outer surface 4c of the tube structure 4a and compensate the uneven distribution of the material.

The tube structure 4a may be made of lightweight metal alloy, for example, aluminum alloy. The first layer 100 may have different chemical properties than the tube structure 4a. In other words, the first layer 100 may be made of material having different chemical properties than the material of the tube structure 4a. The first layer 100 may comprise a metallic material having a lower galvanic potential than the tube structure 4a. In other words, the first layer 100 of material is configured to prevent the corrosion of at least outer face 4b of the tube structure 4a. For example, the first layer 100 may be made of metallic material such zinc, Zn.

In order to give anticorrosion protection to the tube structure 4a the deposition of Zn on the first layer 100 may be not less than 3 g/m² and not more than 7 g/m².

The best anticorrosion feature may be observed when the deposition of Zn is the median value of the range presented in previous paragraph, i.e. when the deposition of zinc on the first layer 100 is around 5 g/m². In particular, the deposition of zinc on the first layer 100 may be 5,04 g/m².

As further shown in Figs 1 and 2, the tube 4 may comprise a second layer 200 of material configured to cover entire first layer 100 of material. In other words, the second layer 200 is applied on the surface created by the first layer 100. Since the second layer 200 may comprise several components, the second layer 200 may comprise different chemical properties than the tube structure 4a and the first layer 100. The purpose of applying the second layer 200 of material is to provide a surface which would allow fixing the tubes 4, for example, to the manifolds of the heat exchanger 1, as well as fixing the fins in-between the plurality of tubes 4. The examples of fixation means are discussed in further paragraphs.

As further shown in Figs 1 and 2, the tube 4 may comprise at least one second layer 200. The second layer 200 may comprise at least an aluminum silicon (AISi) compound. The aluminum silicon compound may enhance fixing the tube 4 to other sub-components, for example, by means of brazing. More specifically, the aluminum silicon may serve as a filler during brazing process.

In order to provide a robust, fluid tight connection between the tube 4 and other sub-components, the AISi12.6 compound may be selected. AISi12.6 should be regarded as Al-Si compound which comprises less than 12.6% of silicon. This feature prevents the tube structure 4a defects that may be caused by big silicon particles or agglomeration of silicon particles as AISi12,6 particles are spheroidal and they are softer than regular silicon particles.

It is to be noted that the tube structure 4a, first layer 100 and the second layer may comprise the thickness, wherein each individual thickness may be measured in a direction perpendicular to the axis of elongation of the tube structure 4a. The thickness of the tube structure 4a may thus be indexed as Ts. The thickness of the first layer 100 may be indexed as T1. The thickness of the second layer 200 may be indexed as T2. The total thickness Tt may thus be defined as the sum of the thickness of the tube structure 4a Ts, the thickness of the first layer 100 T1 and the thickness of the second layer 200 T2. The thickness of the tube structure Ts may be greater than the sum of the thickness of the first layer 100 and the second layer 200.

Further, the amount of AISi12.6 compound within the second layer 200 may not be less than 14 g/m² and not more than 16 g/m². Preferably, the amount of AISi12.6 compound within the second layer 200 is in particular 15 g/m². Further, the size of aluminum silicon particle is not smaller than 5 µm and not greater than 15 µm, i.e. 5-15 micrometers, so that AISi aluminum silicon particle size is not greater than the thickness of the first layer T1.

In order to further facilitate brazing ability of the tube 4, the second layer 200 may comprise potassium aluminum fluoride flux (KAlF₄) and a binder. The potassium aluminum fluoride flux (KAlF₄) enhances soldering and brazing of aluminum, whereas the binder facilitates adhering the solid composition on the surface of the tube 4.

In order to achieve aforementioned effects, it may be preferred that the deposition of aluminum fluoride within the second layer 200 is not less than 6 g/m² and not more than 8 g/m². In particular, the deposition of aluminum fluoride within the second layer 200 maybe in particular 7 g/m². Even more precisely, the deposition of aluminum fluoride within the second layer 200 may be 7,04 g/m².

Further, it may be preferred that the deposition of the binder which may be in form of an organic polymer is not less than 4 g/m² and not more than 6 g/m². In particular, the deposition of organic polymer within the second layer 200 may be in particular 5 g/m². Even more precisely, the deposition of the binder may be in particular 5,15 g/m².

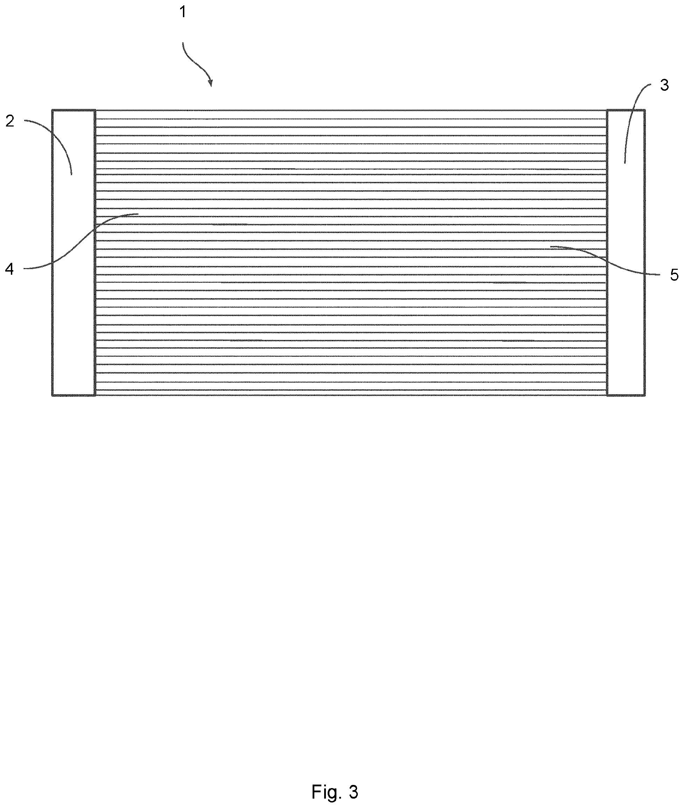

Fig 3. shows a schematic view of a heat exchanger 1 configured to heat exchange between fluids comprising at least one tube 4. The first fluid such as refrigerant, for example, R134a, R1234yf, R744 or R290, may be circulating within the heat exchanger 1 whereas the second fluid, for example ram air, may be delivered to cool down the first fluid.

The heat exchanger 1 may comprise the manifolds 2, 3 and plurality of tubes 4 comprising open ends received in manifolds 2, 3. The tubes 4 may extend along their general axis of elongation so that their open ends may be introduced into respective manifolds 2,3 in order to provide the fluidal communication between these sub-components. The heat exchanger 1 may also comprise fins 5 interlaced between the tubes 4. Usually, the manifolds 2, 3 may be fluidly connected with inlet and/or outlet, however, these sub-components have been omitted for the sake of clarity of the drawings.

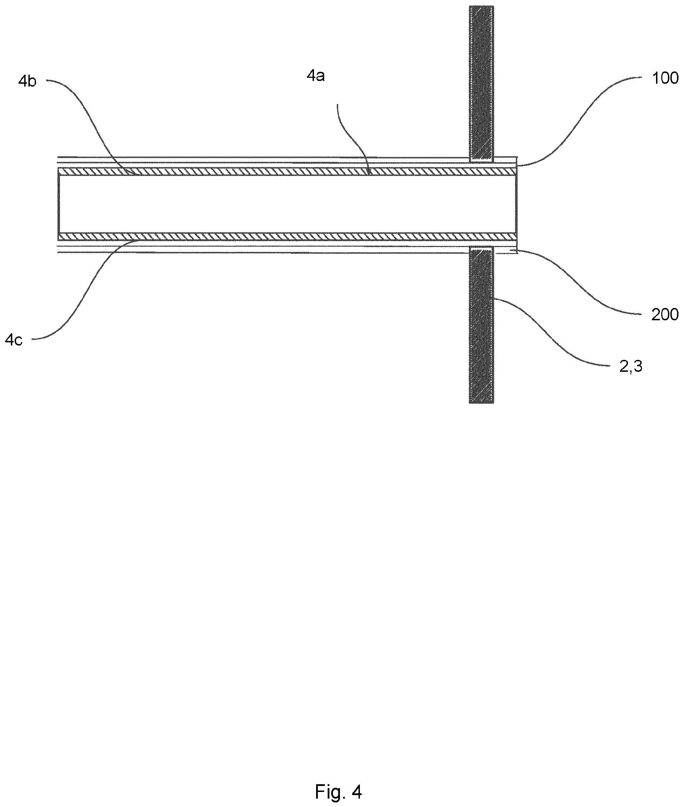

Fig. 4 shows a cross sectional view of the tube 4 and manifold 2, 3 assembly.

As shown in Figs 3 and 4, at least one tube 4 may be fixed between the manifolds 2, 3 by the means of brazing via second layer 200, so that the manifolds 2, 3 are fluidly connected to each other.

As further shown in Fig. 4, the first layer 100 may be located in-between the outer surface 4c of the tube structure 4a and the portion of manifold 2, 3 which is brazed to the tube 4. Thanks to previously discussed specific zinc deposition, the first layer 100 does not deteriorate by e.g. diffusion after the brazing process.

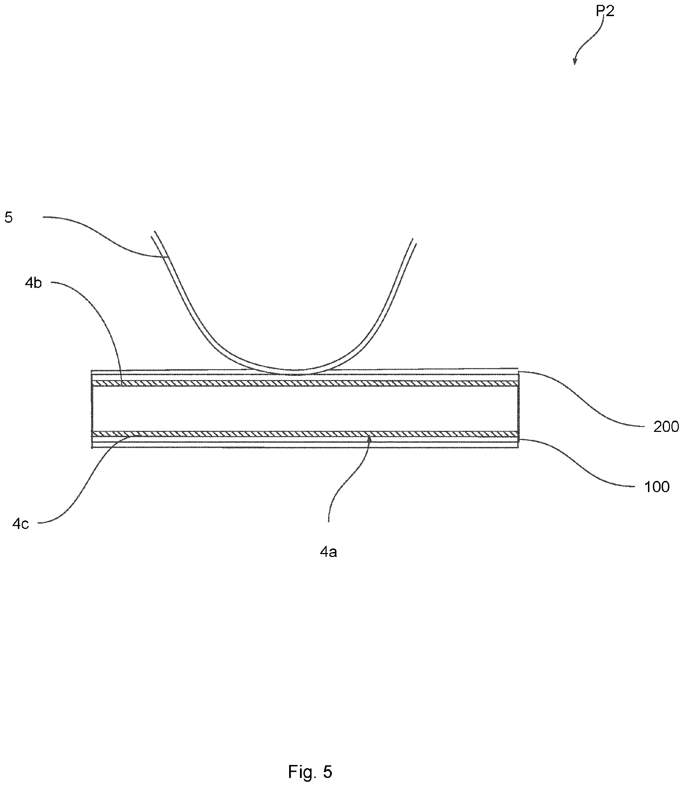

Fig. 5 shows a cross sectional view of the tube 4 and fin 5 assembly.

A shown in Fig. 5, at least one fin 5 may fixed by the means of brazing via second layer 200 in-between proximal pair of tubes 4. Further, the first layer 100 may be located in-between the outer surface 4c of the tube structure 4a and the portion of the fin 5 which is brazed to the tube 4.

As discussed in previous paragraphs, in order to give anticorrosion protection to the tube structure 4a the deposition of Zn on the first layer 100 may be not less than 3 g/m² and not more than 7 g/m². Further, the deposition on zinc in this particular range prevents fins 5 interlaced in-between the tube structure 4a from mechanical destruction of the heat exchanger 1 due to stress accompanying fixation of tubes 4 to the manifolds 2, 3, for example during brazing of these sub-components. The aforementioned range of zinc deposition is therefore optimal to give enough corrosion resistance and the mechanical resistance of the structure of the heat exchanger 1 is also ensured.

Further, the aforementioned AISi12.6 particles allow removing the clad from the fin 5 and they allow creating a direct brazing joint either with fin or with manifold 2, 3.

Therefore, the flux prevents the oxidation of the aluminum surfaces during brazing and allow good wettability of the AISi12, whereas the binder allows to keep the composition of the second layer 200 on the tube 4.

The object of the invention aims to define a method for bringing filler metal and corrosion protection on the tube structure 4a for the heat exchanger 1 which is usually brazed under controlled atmosphere. With respect to extruded tubes, the metallurgical extrusion process does not allow bringing filler metal in known aluminum rolling process. The method described below defines a corrosion protection solution for the tube structure 4a.

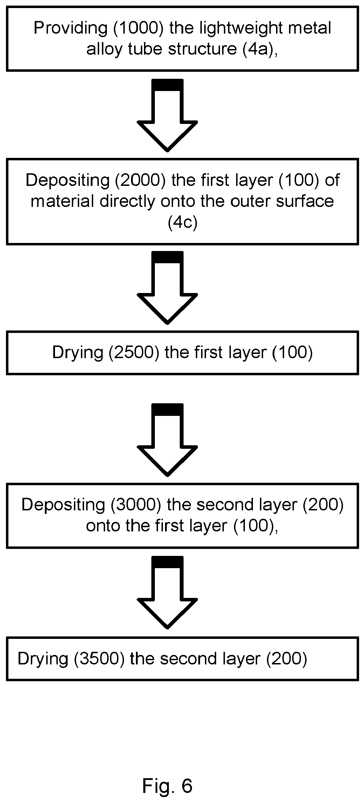

The method may comprise several steps as shown in Fig. 6 and as described in further paragraphs.

Initially, the first step may be providing 1000 at least one aluminum extruded tube structure 4a for heat exchanger 1.

Next, the first layer 100 of material may be deposed 2000 directly onto the outer surface 4c of the tube structure 4a. The deposition of first layer may be carried out by means of zinc arc spraying (ZAS) method. During zinc arc spraying, the tube structure 4a may be shot blasted to certain grade which provides an adequate surface for the zinc to adhere to. After shot blasting the zinc protective coating can be applied. This process involves two zinc wires being fed into a pistol which get electrically charged, one positive and one negative. The wires are forced together which forms an electric arc, melting the wire. Compressed air is then passed through a nozzle which atomises the molten metal and sprays it onto the outer surface 4c of the tube structure 4a. Upon contact, the particles flatten onto the surface, freeze and mechanically bond, firstly onto the outer surface 4c and then onto each other as the coating thickness increases.

The liquid zinc is sprayed to the surface of the tubes to deposit about 5 g/m² of zinc, so that the complete coverage of the outer surface 4c and even distribution of the zinc is provided. It is to be noted, that first layer 100 covers the whole outer surface 4c between the open ends of the tube 4.. The first layer 100 sprayed on the outer surface 4a is initially hot. Before applying the second layer 200, the first layer 100 may be cooled down to room temperature. Thus, the first layer is dried 2500 in order to obtain maximal corrosion protection of the tube 4.

Next, the second layer 200 of material may be deposed 3000 onto the first layer 100. The second layer may comprise mixture of AISi (10-14%) being close to the composition of the eutectic AlSi12.6%, KAlF₄ flux, and a binder to fix the coating onto the first layer 100. The second layer 200 comprising the filler metal and flux allow the brazing of the tube 4 in the controlled atmosphere. Optionally, the second layer 200 may comprise a surface tension additive to promote the homogeneity of the second layer 200. The second layer 200 may then be dried 3500 in order to obtain maximal brazing ability of the tube 4.

The tube 4 comprising layers 100, 200 may further be cut to desired length, and stacked between the manifolds 2, 3 so that the heat exchanger 1 may be assembled. In order to provide better heat exchanger between the fluids, the fins are interlaced with tubes 4 before forming a stack of tubes.

To finalize the heat exchanger 1 production process, the second layer 200 of the tube 4 may be brazed to the manifolds 2, 3 and at least a portion of the fins 5, so that the heat exchanger 1 is ready for operation.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A tube (4) for a heat exchanger (1) comprising a tube structure (4a) made of lightweight metal alloy, wherein the tube structure (4a) comprises an inner surface (4b) and an outer surface (4b), the tube (4) further comprising:
- a first layer (100) of material on the outer surface (4c) of the tube structure (4a), the first layer (100) having different chemical composition than the tube structure (4a),
- a second layer (200) of material on the first layer (100) of material, the second layer (200) having different chemical composition than the tube structure (4a) and the first layer (100), wherein the first layer (100) comprises metallic material having a lower galvanic potential than the tube structure (4a), **characterised in that** the first layer (100) comprises the deposition of zinc particles within the first layer (100), wherein the deposition of zinc is not less than 3 g/m² and not more than 7 g/m², and **in that** the second layer (200) comprises at least an aluminum silicon compound, wherein the deposition of aluminum silicon compound within the second layer (200) is not less than 14 g/m² and not more than 16 g/m².

2. The tube (4) according to claim 1, wherein the deposition of zinc within the first layer (100) is 5 g/m².

3. The tube (4) according to any of the preceding claims, wherein the tube structure (4a) is made of aluminum alloy and the first layer (100) is applied directly onto said aluminum alloy.

4. The tube (4) according any of the preceding claims, wherein the aluminum silicon compound comprises 12.6% of silicon.

5. The tube (4) according to any of the preceding claims, wherein the deposition of aluminum silicon compound within the second layer (200) is in particular 15 g/m².

6. The tube (4) according to claims 4 and 5, wherein size of aluminum silicon particle is not smaller than 5 µm and not greater than 15 µm.

7. The tube (4) according to the preceding claim, wherein the second layer (200) further comprises a potassium aluminum fluoride flux and a binder.

8. The tube (4) according to the preceding claim, wherein the deposition of potassium aluminum fluoride flux within the second layer (200) is not less than 6 g/m² and not more than 8 g/m².

9. The tube (4) according to the preceding claim, wherein the deposition of potassium aluminum fluoride flux within the second layer (200) is 7 g/m².

10. The tube (4) according to claim 7, wherein the binder is an organic polymer, wherein the deposition of binder is not less than 4 g/m² and not more than 6 g/m².

11. The tube (4) according to the preceding claim, wherein the deposition of organic polymer within the second layer (200) is 5 g/m².

12. A heat exchanger (1) configured to heat exchange between fluids comprising at least one tube (4) according to claim 1.

13. The heat exchanger (1) according to claim 13, wherein the heat exchanger (1) comprises manifolds (2, 3), plurality of tubes (4) comprising open ends received in said manifolds (2, 3), and plurality of fins (5) interlaced between the tubes (4), wherein at least one tube (4) is fixed between the manifolds (2, 3) by the means of brazing via second layer (200), so that the manifolds (2, 3) are fluidly connected.

14. The heat exchanger (1) according to claim 13, wherein the first layer (100) is located in-between the outer surface (4c) and the portion of the fin (5) which is brazed to the tube (4).

15. A method of manufacturing a tube (4) for a heat exchanger (1) comprising steps of:
- providing (1000) the lightweight metal alloy tube structure (4a),
- depositing (2000) the first layer (100) of material directly onto the outer surface (4c) of the tube structure (4a) by means of zinc arc spraying method, wherein the liquid zinc is sprayed onto the outer surface (4c) to deposit about 5 g/m² of zinc, so that the complete coverage of the outer surface (4c) and even distribution of the zinc is provided,
- drying (2500) the first layer (100),
- depositing (3000) the second layer (200) onto the first layer (100),
- drying (3500) the second layer (200).
